# EUROPÄISCHE PATENTANMELDUNG

(11) **EP 1 844 731 A1**
(43) Veröffentlichungstag der Anmeldung: **17.10.2007**
(21) Anmeldenummer: 07005647.8
(22) Anmeldetag: 20.03.2007
(51) Int. Cl.: A61C 13/10, A61C 13/00

(54) **Verfahren und Vorrichtung(en) zur Herstellung von Zahnprothesen**

(30) Priorität: 12.04.2006 DE 102006017651
(71) Anmelder: Heraeus Kulzer GmbH, 63450 Hanau (DE)
(72) Erfinder: Stange, Frank-Uwe, 88085 Langenargen (DE); Savic, Novica, 63691 Ranstadt (DE); Renz, Karl-Heinz, 60489 Frankfurt (DE)
(74) Vertreter: Kühn, Hans-Christian

(57) **Zusammenfassung**

Es wird ein Verfahren zur Herstellung einer Zahnprothese mit den Schritten
**A** Herstellung eines Modells aus einem sich nicht mit dem Zahnprothesenmaterial verbindenden Werkstoff,
**B** Fixierung der Zähne,
**C** Auffüllen des Zwischenraums zwischen künstlichem Zahn/Zähnen und Modell beschrieben, wobei bei Schritt C geschmolzenes thermoplastisches Material in Schichten aufgetragen wird und nach jeder Schicht durch Erkalten gehärtet wird.

## Beschreibung

Die Erfindung betrifft Verfahren und Vorrichtung(en) zur Herstellung von Zahnprothesen.

Die Herstellung von Zahnprothesen kann auf unterschiedliche Weise erfolgen. Zu nennen sind z. B. die herkömmlichen Verfahren der Pulver/Flüssigkeitstechnologie, wie sie seit langem bekannt sind und in der Literatur beschrieben sind (z.B. EP 1243230 A2 ≈ US 6,881,360B2 und Ullmann¹). Generell sind drei unterschiedliche Hauptmaterialklassen zur Herstellung von totalprothetischen Arbeiten bekannt. Dies sind auf Polymethylmethacrylat (PMMA) basierende Zweikomponentenmaterialien [Handelsprodukte Palapress, Paladur (Heraeus Kulzer, DE), SR 3/60® Quick (Ivoclar, LI), Degupress® (Degussa-Hüls, DE)]; PMMA-freie heißhärtende Materialien [Handelsprodukte sind z.B. Paladon® 65 (Heraeus Kulzer, DE), SR 3/60®, SR Ivocap® (Ivoclar, LI), Lucitone® (Dentsply, US)] sowie thermoplastisch verarbeitbare Spritzgießmassen.
¹ Dental Materials Ullmann's Encyclopedia of Industrial Chemistry Copyright © 2002 by Wiley-VCH Verlag

Die thermoplastische Materialien werden erhitzt und meist über ein Spritzgussverfahren in einen Hohlraum injiziert. Ein bekanntes Verfahren ist "Polyapress" ®, welches unter anderem von der Fa. Bredent, Senden (DE) vertrieben wird. Es hat nicht an Versuchen gefehlt, Polymere wie etwa PVC, Polyurethan, Polyamid oder Polycarbonat einzusetzen².
² aaO ***5.1.5. Other Denture Resins***

Weiter existieren Verfahren, die auf licht- oder mikrowellenhärtenden 1-Komponenten-Materialien aufbauen (z.B. Versyo.com® von Heraeus Kulzer)³.
³ aaO ***5.1.3. Light-Cured Polymers, 5.1.4. Microwave-Cured Polymers***

Allen diesen Werkstoffen gemeinsam sind die zur Vorbereitung der Kunststoffverarbeitung notwendigen Arbeiten.

Aus der Zahntechnik sind außerdem schichtaufbauende Verfahren bekannt. Diese werden meist in Verbindung mit lichthärtenden Materialien angewandt. Z.B. zur Verblendung von Metallkronen oder zur Erstellung einer Prothese. Vorteile bei diesen Verfahren sind die während des Verfahrens mögliche Kontrolle und die Möglichkeit der Variation der Farben, um möglichst ästhetische zahntechnische Arbeiten zu erhalten.

Es wurden auch Rapid-Prototyping-Verfahren zum Einsatz in der Zahntechnik vorgeschlagen. Dabei wird mit polymerisierbaren Schichten (DE 10114290 A1, DE 10150256 A1) oder Ink-Jet-Pulverdruck (US 6322728 B1) gearbeitet.

Überraschenderweise hat sich gezeigt, dass auch mit thermoplastischen Materialien ein schichtweiser Aufbau möglich ist.

Die Erfindung betrifft demnach ein Verfahren zur Herstellung einer Zahnprothese mit den Schritten
**A** Herstellung eines Modells aus einem sich nicht mit dem Zahnprothesenmaterial verbindenden Werkstoff,
**B** Fixierung der Zähne,
**C** Auffüllen des Zwischenraums zwischen künstlichem Zahn/Zähnen und Modell,
wobei bei Schritt C geschmolzenes thermoplastisches Material in Schichten aufgetragen wird und nach jeder Schicht durch Erkalten gehärtet wird.

Zur Durchführung sind verschiedene Wege möglich:
1. Thermoplastisches Material wird als Granulat in einem entsprechenden Handgerät geschmolzen und anschließend durch Druck über eine Düse direkt appliziert. Auftragssysteme dieser Art sind von der Applikation Schmelzklebstoffe bekannt.
2. Thermoplastisches Material liegt in Form eines Fadens oder Drahtes mit einem Durchmesser zwischen 0,1 mm und 10 mm vor. Das Aufschmelzen erfolgt hierbei durch gezielte Wärmeeinbringung kurz vor dem Auftrag. Der Transport des thermoplastischen Fadens erfolgt zweckmäßig unaufgeschmolzen in einem flexiblen Kabel. Aufgetragen wird durch eine Düse, kurz vor der sich eine Heizzone befindet, welche das Aufschmelzen des Materials bewirkt. Ein Vorteil im Vergleich zu Weg 1 ist die schonende Behandlung des thermoplastischen Materials. So werden Schädigungen des Materials durch dauerhafte Hitzeeinwirkung verhindert.
3. In Abwandlung des Weges 2 kann die Auftragsdüse in einem maschinell gesteuerten Gerät fixiert sein. Hierbei erfolgt die Auftragung vollautomatisiert in einem Computer Aided Manufacturing - Verfahren.

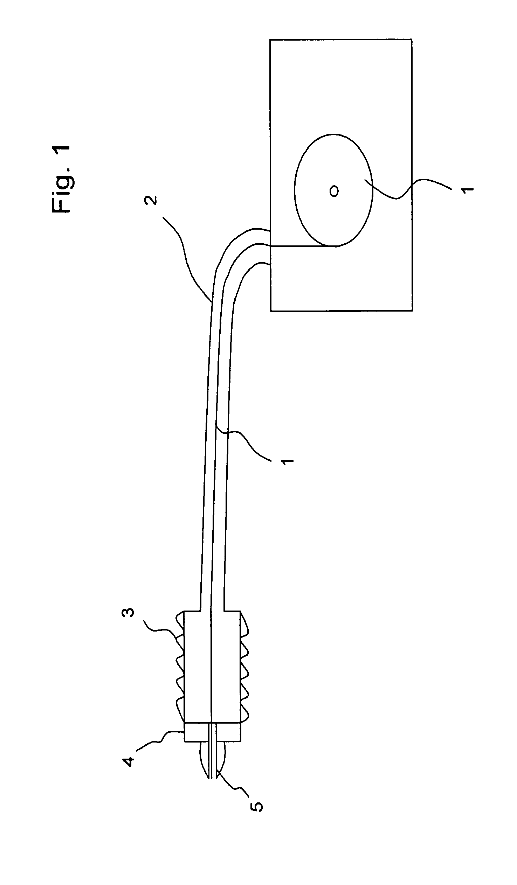

Fig. 1 zeigt die Skizze einer Vorrichtung zur Durchführung des Verfahrens.

Die Erfindung betrifft auch eine Vorrichtung zur Durchführung des Verfahrens mit den obengenannten Schritten A, B und C, mit
- einem Handgriff 3,
- einer daran angeordneten Einrichtung zum Transport eines Kunststofffadens/-drahtes 1 in einem flexiblen Kabel 2,
- einer an die Transporteinrichtung anschließende rohrförmige Heizzone 4 zur Aufnahme des Kunststofffadens/-drahtes,
- einer an die Heizzone anschließenden Auftragsdüse 5.

Statt dem Handgriff kann auch ein rechnergesteuerter, beweglicher Arm vorgesehen sein.

Die Erfindung betrifft entsprechend auch ein Verfahren mit den obengenannten Schritten A, B und C, bei dem das thermoplastische Material in Form eines Fadens 1 mit einem Durchmesser zwischen 0,1 mm und 10 mm vorliegt, der Transport des thermoplastischen Fadens in einem flexiblen Kabel 2 erfolgt, und der Faden durch gezielte Wärmeeinbringung kurz vor dem Auftrag geschmolzen wird.

Die Herstellung der Prothesen kann prinzipiell mit allen thermoplastischen Materialien erfolgen. Vorteilhaft sind Materialien mit einer niedrigen Schmelzviskosität, wie z.B. Polyamid oder Polysulfon.

Ein besonderer Vorteil ist die rationelle Herstellung einer dentalen Prothese. Geschickte Zahntechniker sparen sich die Aufstellung der Zähne (in Wachs), wie dies bei konventionellen Verfahren der Fall ist.

Neben der beschriebenen Herstellung einer Zahnprothese ist die Anwendung des Verfahrens zur direkten Füllungslegung durch den Zahnarzt bei Verwendung eines niedrigschmelzenden Thermoplasten (oberhalb 40°C, aber unterhalb der Temperatur, bei der Gewebeschädigung auftritt) denkbar.

### Beispiel

Thermoplastisches Material liegt in Form eines Fadens/Drahtes 1 mit einem Durchmesser zwischen 0,1 mm und 10 mm vor. Das Aufschmelzen erfolgt hierbei durch gezielte Wärmeeinbringung kurz vor dem Auftrag. Der Transport des thermoplastischen Fadens/Drahtes erfolgt unaufgeschmolzen in einem flexiblen Kabel 2. In einem Handstück 3, welches mit dem Kabel 2 verbunden ist, ist kurz vor der Auftragsdüse 5 eine Heizzone 4 angebracht, welche das Aufschmelzen des Materials bewirkt.

Das Material wird schichtweise aufgetragen und durch Erkalten gehärtet.

Die Zähne können durch zwei unterschiedliche Verfahren im Material verankert werden:
1. Die Zähne werden vorab positioniert und mit einer mechanischen Haltevorrichtung (z.B. Filou 28) oder einem Abformmaterial fixiert. Anschließend lässt man das Material um die positionierten Zähne fließen und erkalten. Der Verbund zwischen Material und künstlichem Zahn kann chemisch oder rein mechanisch sein.
2. Die Zähne werden während der Verarbeitung eingebracht und frei positioniert. Ein ähnliches Verfahren ist das zur Zeit oft praktizierte Verfahren der Zahnaufstellung in Wachs.

Es wurde gemäß 1. eine Prothese hergestellt, die in der Funktion einer auf konventionellem Wege erstellten Prothese gleicht.

## Patentansprüche

1. Verfahren zur Herstellung einer Zahnprothese mit den Schritten
**A** Herstellung eines Modells aus einem sich nicht mit dem Zahnprothesenmaterial verbindenden Werkstoff,
**B** Fixierung der Zähne,
**C** Auffüllen des jeweiligen Zwischenraums zwischen künstlichem Zahn/Zähnen und Modell,
**dadurch gekennzeichnet, dass** bei Schritt C geschmolzenes thermoplastisches Material in Schichten aufgetragen wird und nach jeder Schicht durch Erkalten gehärtet wird.

2. Verfahren nach Anspruch 1, bei dem bei Schritt B die Fixierung durch eine Fixiervorrichtung oder mit einem Abformmaterial erfolgt.

3. Verfahren nach Anspruch 1 oder 2, bei dem das thermoplastische Material als Granulat in einem Handgerät geschmolzen wird und anschließend durch Druck über eine Düse direkt appliziert wird.

4. Verfahren nach Anspruch 1 oder 2, bei dem das thermoplastische Material in Form eines Fadens (1) mit einem Durchmesser zwischen 0,1 mm und 10 mm vorliegt, der Transport des thermoplastischen Fadens in einem flexiblen Kabel (2) erfolgt, der Faden durch gezielte Wärmeeinbringung kurz vor dem Auftrag geschmolzen wird.

5. Vorrichtung zur Durchführung des Verfahrens nach Anspruch 4 mit
• einem Handgriff (3),
• einer daran angeordneten Einrichtung zum Transport eines Kunststofffadens/-drahtes (1) in einem flexiblen Kabel (2),
• einer an die Transporteinrichtung anschließende rohrförmige Heizzone (4) zur Aufnahme des Kunststofffadens/-drahtes,
• einer an die Heizzone anschließenden Auftragsdüse (5).

6. Vorrichtung zur Durchführung des Verfahrens nach Anspruch 3, wobei statt des Handgriffs ein rechnergesteuerter, beweglicher Arm vorgesehen ist.
